**Europäisches Patentamt**

**European Patent Office**

**Office européen des brevets**

(11) Veröffentlichungsnummer : **0 081 147 B2**

(12) # NEUE EUROPÄISCHE PATENTSCHRIFT

(45) Veröffentlichungstag der neuen Patentschrift :
**08.04.92 Patentblatt 92/15**

(21) Anmeldenummer : **82110870.1**

(22) Anmeldetag : **24.11.82**

(51) Int. Cl.$^5$ : **E04C 2/24, B32B 21/02**

(54) Dekorative Bauplatte, Verfahren zu ihrer Herstellung und ihre Verwendung.

Die Akte enthält technische Angaben, die nach dem Eingang der Anmeldung eingereicht wurden und die nicht in dieser Patentschrift enthalten sind.

(30) Priorität : **04.12.81 DE 3147989**

(43) Veröffentlichungstag der Anmeldung :
**15.06.83 Patentblatt 83/24**

(45) Bekanntmachung des Hinweises auf die Patenterteilung :
**16.06.87 Patentblatt 87/25**

(45) Bekanntmachung des Hinweises auf die Entscheidung über den Einspruch :
**08.04.92 Patentblatt 92/15**

(84) Benannte Vertragsstaaten :
**AT BE CH DE FR GB IT LI LU NL SE**

(56) Entgegenhaltungen :
**DE-A- 2 219 164**

(56) Entgegenhaltungen :
**DE-A- 2 657 924**
**GB-A- 984 170**
**GB-A- 1 015 803**
**GB-A- 1 052 667**
**GB-A- 1 433 464**
**GB-A- 2 070 515**
**US-A- 2 582 961**
**US-A- 3 823 103**
**ABSTRACT BULLETIN OF THE INSTITUTE OF PAPER CHEMISTRY, Band 47, Nr. 9, März 1977, Seite 1026, Nr. 9972(U), Appleton, USA**
**Römpps Chemie-Lexikon, 7. Auflage, 1973, S. 525-528, 1493-1501**

(73) Patentinhaber : **HOECHST AKTIENGESELLSCHAFT**
**Postfach 80 03 20**
**W-6230 Frankfurt am Main 80 (DE)**

(72) Erfinder : **Hemels, Martinus Hendrikus**
**Margrietlaan 61**
**NL-6006 ZW Weert (NL)**
Erfinder : **Schuren, Gerardus Wilhelmus**
**Limburgstraat 6**
**NL-6037 SH Kelpen (NL)**

Jouve, 18, rue Saint-Denis, 75001 PARIS

## Beschreibung

Die Erfindung bezieht sich auf eine dekorative, insbesondere für Außenanwendungen geeignete Bauplatte, bestehend aus einem gepreßten Kern aus Holzteilchen, die von hitzegehärtetem Phenol-Formaldehyd-Harz umgeben sind, und dekorativer Schicht auf einer oder beiden Oberflächen des Kerns.

Die Erfindung bezieht sich ferner auf ein Verfahren zur Herstellung einer Bauplatte dieser Art, bei dem man eine oder mehrere übereinander angeordnete mechanisch vorverdichtete Schichten auf Basis von Holzteilchen, welche mit einem hitzehärtbaren Phenol-Formatdehyd-Harz versehen wurden, unter Ausbildung des Kerns der Bauplatte in der Hitze verpreßt, wobei das Kunstharz gehärtet wird, und die Oberfläche(n) des Kerns mit dekorativer Schicht versieht.

Die Erfindung bezieht sich ferner auf die Verwendung der Bauplatte.

Zur Herstellung der bekannten dekorativen Schichtstoffplatten wird im allgemeinen zunächst Natronkraftpapier mit einem niedermolekularen Duroplastharz imprägniert und bei 120 bis 160°C getrocknet, wobei das Harz teilweise aushärtet. Eine Anzahl dieser vorbehandelten Papiere wird übereinander gestapelt, sie bilden den Kern der späteren Schichtstoffplatte. Auf eine oder auf beide äußeren Papierlagen des Stapels werden üblicherweise eine dekorative Papierschicht und gegebenenfalls eine abdeckende Papierschicht gelegt, die gewöhnlich ebenfalls in entsprechender Weise mit einem Duroplastharz vorbehandelt sind. Der Stapel wird bei einer Temperatur von 120 bis 180 °C unter einem Druck von mindestens 70 bar in Stationärpreßvorrichtungen ausgehärtet. Während dieses Vorgangs fließen die Harze und werden gehärtet, wodurch die einzelnen Lagen des Kerns und der Oberflächenschichten ein in sich geschlossenes, nicht schmelzbares, starres, vernetztes Produkt bilden. Die erhaltene Schichtstoffplatte wird vor allem in der Möbelindustrie und im Bausektor verwendet.

Diese bekannte Schichtstoffplatte zeigt den Nachteil einer relativ geringen Dimensionsstabilität unter wechselnden Klimabedingungen. Bei schwankender Luftfeuchtigkeit und Veränderungen der Temperatur tritt eine Ausdehnung bzw. Schrumpfung der Schichtstoffplatte in Längsrichtung und besonders stark quer zu ihrer Längsrichtung ein. Die ursprünglich plane Schichtstoffplatte kann sich unter Aufnahme von Feuchtigkeit verwerfen und hierbei eine konkav gewölbte Oberfläche erhalten, oder ihre Oberfläche zeigt nach Feuchtigkeitsaufnahme eine im Querschnitt wellenförmige Struktur.

Diese für Anwendungen im Bau nicht befriedigende Dimensionsstabilität hat ihre Ursache in der Struktur des Kerns dieser bekannten Schichtstoffplatte. Die den Kern bildenden Natronkraftpapiere bestehen aus Fasern, die zu 60 bis 80 % in Längsrichtung und zu 40 bis 20 % in Querrichtung zur Papierbahn angeordnet sind. Infolgedessen sind die Eigenschaften dieser Papiere in diesen Richtungen verschieden. Diese in Längsrichtung der Papierbahn besonders ausgeprägte Orientierung wird noch zusätzlich verstärkt während der Imprägnierung der Papierbahn mit hitzehärtbaren, in Wasser oder organischen Lösungsmitteln gelösten Harzen und anschließender Trocknung, wenn das nasse Natronkraftpapier in Längsrichtung einer Zugbelastung unterworfen wird. Diese in Längsrichtung der Papierbahn verhältnismäßig starke Orientierung hat zur Folge, daß die resultierende Schichtstoffplatte auf Basis von Natronkraftpapier unter schwankenden Klimabedingungen in Längs- und Querrichtung verschieden starke Dimensionsänderungen zeigt.

Auch bezüglich ihre Dichte sind Natronkraftpapiere nicht homogen. Ihre Oberseite weist herstellungsbedingt eine niedrigere Dichte auf als ihre Siebseite. Eine vollkommene Homogenität der Papiere ist aus diesem Grund prinzipiell nich erreichbar.

Weiterhin ist im herkömmlichen Verfahren eine vollständige Imprägnierung und Benetzung der einzelnen Papierfasern wegen der unterschiedlichen Dichte der Papierbahnen und der aus diesem Grund schwankenden Penetrationseigenschaften für Harzlösungen nur schwer kontrollierbar. Nicht beharzte Fasern können jedoch bei Anwendungen im Naß-, Feucht- und Außenbereich zur Blasenbildung im Plattenkern führen.

Darüberhinaus ist durch den schichtweisen Aufbau der Platte und der Inhomogenität der Papierbahn eine relativ geringe und teilweise unsichere Armierung zwischen den einzelnen Kernschichten vorhanden, wodurch die Querzugfestigkeit des Plattenmaterials relativ niedrig sein kann und Spaltung bei Querzugbelastung auftreten kann. Im Klimawechsel bei Dauerbelastung unter Außenbedingungen im Klimaschrank oder bei Außenbewitterung kann diese Inhomogenität zur Spaltung des Plattenkerns im Randbereich führen.

Eine Anwendung dieser bekannten Schichtstoffplatten in Baukonstruktionen, bei denen das Material wechselnden Temperatur- und Feuchtigkeitseinflüssen ausgesetzt wird, ist aus dienen verschiedenen Gründen mit zusätzlichem Konstruktionsaufwand verbunden.

Ferner sind Platten aus Holzspänen und Holzfasern mit einer Matrix von Aminoplast- oder Phenolharzen oder Zement und auch Sperrholzplatten bekannt, welche eine gleichmäßige Dichte zeigen und deshalb geeignet sind für Außenanwendung oder feuchte Innenanwendungen. Diese sind im Gegensatz zu Schichtstoffplatten jedoch nicht wartungsfrei, müssen wegen starker Wasseraufnahme durch die nicht geschlossene Oberfläche regelmässig allseitig nachbehandelt werden, weisen unter Wasseraufnahme starke Quellung auf unter Zunahme ihrer Dicke, sind nicht dekorativ und zeigen eine geringere Festigkeit.

Es wurde auch ein dekoratives plattenförmiges Formteil aus Holzsägespänen beschrieben (DE-A 19 12 300), welches eine Matrix aus Phenolharz enthalten kann, wobei der Harzgehalt zwischen 5 und 15 Gew.-%, bezogen auf trockene Holzspäne, beträgt. Dieses Formteil ist allerdings bezüglich der Witterungsbeständigkeit nicht zufriedenstellend. Es läßt sich feststellen, daß bei Bewitterungsversuchen starke Wasseraufnahme und infolgedessen Randquellung und Kernspaltung und dadurch Rißbildung an der Oberfläche bereits nach wenigen Wochen eintritt.

Auch die Leichtbauplatte der GB-A-1 015 803 kann Oberflächenschichten aufweisen. Sie enthält aber ebenfalls keine Holzfasern, sondern Holzwolle mit einer Mindestlänge,von etwa 50 mm. Diese Holzteilchen überwiegen in der Gesamtmasse dieses Holzprodukts, während das Harz nur zu einem geringen Anteil vorhanden ist, nämlich vorzugsweise 6-10%, und nur zum gegenseitigen Verbinden der Holzteilchen dient. Die Dichte dieser Platte ist mit maximal etwa 480 kg/m³ relativ niedrig.

Es ist deshalb Aufgabe der Erfindung, eine dekorative Bauplatte der eingangs genannten Art und ein Verfahren zu ihrer Herstellung vorzuschlagen, welche die erwähnten Nachteile nicht aufweist, sondern in Längs- und Querrichtung eine gleichwertige und höhere Maßbeständigkeit unter Einfluß von wechselnden Klimabedingungen, wie z. B. der Luftfeuchtigkeit, und eine erhöhte Querzugfestigkeit besitzt. Sie soll eine geringere Neigung zeigen, bei Einwirkung von Wasser sich zu wellen oder unter Krümmung zu verwerfen und ihre Abmessungen zu verändern. Die Bauplatte soll ferner gegenüber den bisherigen Formteilen aus Holzspänen und Holzfasern eine höhere Biegefestigkeit, eine höhere Zugfestigkeit, Querzugfestigkeit und Maßbeständigkeit sowie verringerte Wasseraufnahme aufweisen.

Weiterhin soll das Material homogenen Aufbau und in Längs- und Querrichtung isotrope Eigenschaften aufweisen, sowie eine allseitig geschlossene Oberfläche zeigen. Die Bauplatte soll sich auf einfache Weise bearbeiten lassen, z. B. mit Fräsvorrichtungen.

Diese Aufgabe wird gelöst durch eine Bauplatte mit den im Anspruch 1 genannten Merkmalen. Die Ansprüche 2 bis 7 beschreiben bevorzugte Ausführungsformen der Bauplatte. Gegenstand der Erfindung ist ferner das im Anspruch 8 genannte Verfahren. Die Ansprüche 9 bis 13 betreffen Weiterbildungen des Verfahrens. Die Aufgabe wird ferner gelöst durch die im Anspruch 14 angegebene Verwendung. Bei der Verwendung der Bauplatte als Fassadenverkleidung wird es direkter Außenbewitterung unterworfen und dient als vorgehängte Fassade, Brüstungsplatte, Balkonverkleidung oder Dachblende.

Es wurde somit gefunden, daß sich faserförmige Holzpartikel mit relativ großen Mengen an hitzehärtbarem Harz unter hohem Druck und hoher Temperatur verdichten lassen, so daß eine Bauplatte mit einer Dichte von 1100 bis 1500 kg/m³ mit geringer Wasserabsorption und Dickenquellung, ausgezeichneter Maßbeständigkeit sowie hoher Biege- und Zugfestigkeit entsteht.

Die erhaltene Bauplatte zeigt in Gegensatz zu den bisherigen un vorher beschriebenen Plattenmaterialien eine ausgezeichnete Witterungsbeständigkeit in extremen Klimawechselbedingungen, eine gute Isotropie in ihren Eigenschaften in Längs- und Querrichtung und eine allseitig glatte, geschlossene und nicht poröse Oberfläche.

Darüberhinaus weist die Bauplatte verbesserte physikalische Eigenschaften, z. B. eine hohe Festigkeit, gutes Verhalten bei Stoßbeanspruchung und keine Splitterneigung auf. Auch die chemische Reisistenz und Oberflächenhärte sind ausgezeichnet.

Unter einer Bauplatte ist ein flächenhafter Körper zu verstehen, dessen Oberflächenform dem Anwendungszweck angepaßt ist und der zum Beispiel gebogene Form aufweist. Insbesondere ist die Bauplatte ein Plattenkörper mit im wesentlichen ebener Fläche.

Die Kernschicht besteht aus einer oder mehreren Schichten aus Holzfasern und/oder Cellulosefasern. Vorteilhafterweise liegt der Anteil der Cellulosefasern bei maximal 60 Gew.-%. Bei mehr als fünf Schichten ist keine Verbesserung der Eigenschaften festzustellen. Ein kontinuierliches Herstellungsverfahren läßt sich mit 1 bis 3 Schichten gut durchführen.

Die Holzfasern werden hergestellt aus Holzarten, die eine Zerfaserung erlauben, z. B. aus Nadelholz, wie Fichten- oder Kiefernholz, oder Laubholz, wie Kastanien- oder Buchenholz. Weiterhin können zusätzlich zu den Holzfasern Cellulosefasern und industrielle Holz-, Papier- und Celluloseabfälle, z. B. auch Holzmehl oder Holzschliff, verwendet werden; ebenso sind Abfälle aus holzverarbeitenden Werkstätten geeignet. Es ist auch möglich, einen Teil der Holzfasern, der Cellulosefasern bzw. der Holzabfälle, vorzugsweise bis zu 20 Gew.-%, durch Kunststoffabfälle, z. B. in Form von Fasern oder Granulat, zu ersetzen. Das Holz wird gewaschen, um Metall-, Stein- oder Sandspuren zu entfernen, danach in einer Mühle zu Holzschnitzeln zerkleinert.

Die Holzschnitzel werden in einem Digestor (Dampfkessel) mit Wasserdampf unter Wasserdampfdruck von 1 bis 10 bar in wenigen Minuten erweicht und anschließend z. B. zwischen zwei beweglichen Scheiben zu Holzfasern zerkleinert.

Die auf diese Weise aufgeschlossenen Holzfasern haben eine Länge von 0,3 bis 20 mm, eine mittlere Länge von 0,5 bis 3 mm und einen mittleren Durchmesser von 0,025 bis 0,05 mm. Der Durchmesserbereich liegt zwischen 0,01 und 1 mm, in Abhängigkeit des verwendeten Rohholzes und der Zerfaserungsbedingungen. Länge und Durchmesser der verwendeten Cellulosefasern liegen in dem gleichen Dimensionsbereich. Während der Zerfaserung mit Wasserdampf oder unmittelbar vor der anschließenden Trocknung können die Holzteilchen gegebenenfalls mit einer alkalischen Formaldehyd-Lösung unter chemischer Reaktion von Formaldehyd mit den Holzfasern behandelt werden, z. B. in einer Dampfbehandlung bei 3 bis 10 bar und einer Temperatur von 80 bis 180 °C. Durch diese Vorbehandlung erhält man besonders maßbeständige und wasserunempfindliche Platten. Die dünnen Fasern am Austritt der Zerfaserungsmaschine werden gegebenenfalls in wenigen Sekunden getrocknet, z. B. mit einem Gebläse oder mit offener Flamme in einem Rohrtrockner. Noch im feuchten Zustand oder nach der Trocknung auf 3 bis 10 % Feuchtigkeitsgehalt wird das Harz hinzugefügt, das zur Bindung der losen Holzfasern dient.

Das Harz, mit dem die Fasern imprägniert werden, ist ein Phenol-Formaldehyd-Harz.

Besonders geeignet ist ein Phenol-Formaldehyd-Harz, welches selbst bei höherer Temperatur, wie z. B. 140 bis 160 °C, relativ langsam aushärtet (B-Zeit größer als 5 Min., zweckmäßigerweise nicht größer als 30 Min., bei 130 °C). Das mittlere Molekulargewicht des Harzes kann im höheren oder niedrigeren Bereich liegen. Solche Phenol-Formaldehyd-Harze sind. z. B. unter der Bezeichnung ®Phenodur Hersteller Hoechst, im Handel.

In einer anderen Ausführungsform werden die Fasern zunächst mit niedermolekularem, langsam aushärtendem Phenol-Formaldehyd-Harz (®Phenodur PR 271 ) imprägniert, gegebenenfalls erhitzt, ohne vollständige Aushärtung des Harzes, und danach ein zweites, jetzt hochmolekulares, langsam aushärtendes Phenol-Formaldehyd-Harz (Phenodur VPR 45, gleiche B-Zeit) auf die Fasern aufgebracht. Platten, die mit diesen Harzen bzw. Harzkombinationen hergestellt sind, zeigen besonders geringe Wasseraufnahme. Unter B-Zeit ist die Zeitdauer zu verstehen, in der Harz in noch quell- und schmelzbarem B-Zustand verweilt, bis es durch Polykondensation in den nichtquellbaren, nichtschmelzbaren und nicht-schweißbaren C-Zustand überführt ist.

Dem Harz können bekannte flammwidrige Additive zugesetzt werden, oder es werden Harze verwendet, die durch Modifizierung der Molekülkette flammwidrige Eigenschaften zeigen (US-Patentschriften 2,582,961, 3,372,131, 3,832,316, 4,010,296, DE-B-22 61 856). In einer solchen Ausführungsform werden die Fasern beispielsweise mit einem vorkondensierten Harz auf Basis von DicyandiamidFormaldehyd-Phosphorsäure, Melamin-Formaldehyd-Phosphorsäure oder Harnstoff-Formaldehyd-Phosphorsäure als erster Komponente und einem vorkondensierten Phenol-Formaldehyd-Harz als zweiter Komponente beschichtet. Das Harzgemisch wird dann in den C-Zustand überführt. Die Harze der ersten Komponente werden bekanntlich hergestellt durch Vorkondensierung der Amino-Formaldehyd-Anteile und Zugabe von Phosphorsäure während oder nach der Vorkondensierung. Dicyandiamid-FormaldehydHarze mit Phosphatkomponente sind z. B. unter der Bezeichnung SKW-VP 130 SP (Herst. SKW Trostberg) im Handel.

Die Harzauftragsmenge auf den Fasern beträgt 15 bis 90 Gew.-% (bezogen auf das Fasergewicht), insbesondere 15 bis 60 Gew.-% Harztyp und Harzdosierung bestimmen die wesentlichen Eigenschaften des Plattenmaterials. Das Hinzufügen des Harzes, d. h. die Beleimung, erfolgt mittels direkter Zugabe des Harzes in wäßriger, insbesondere alkalischer Lösung in die Austrittsrohrleitung der Zerfaserungseinheit oder mit herkömmlichen Beleimungsmischern, z. B. durch Einblasen mit Druckluftdispergierdüsen. Vorteilhaft verwendet man ein elektrostatisch arbeitendes Sprühsystem oder ein « airless »-Sprühsystem.

Die beleimten Fasern werden z. B. mit Heißluft anschließend getrocknet bis zu einer Restfeuchte von 2 bis 15 Gew.-%, vorzugsweise 4 bis 10 Gew.-%, wobei das Harz teilweise aushärtet.

Nach der Trocknung werden die Fasern gelagert oder direkt zur Streu-Einrichtung gebracht, welche die Fasern kontinuierlich gleichmäßig in Wirrlage ablegt, vorzugsweise über die gesamte Breite eines in wesentlichen horizontalen Transportbandes verteilt, wo eine bahnförmige vliesstoffartige Matte - Kern der späteren Platte - gebildet wird. Die Streueinrichtung ist beispielsweise ein über die Formstraße pendelnder Streuschacht. Nach dem kontinuierlichen Formen der Matte auf dem Transportband, z. B. mit Abstreifern und Verteilern in Form von Bändern, Kratzern, Bürsten oder Walzen, wird die Matte, vorzugsweise kontinuierlich, in eine Preßeinrichtung bei etwa 3 bis 25 bar, insbesondere ohne zu erwärmen, vorgepreßt und unter Dickenverminderung verdichtet und anschließend eventuell ein- oder beidseitig mit einer dekorativen Schicht aus einem Gewebe, Vliesstoff, einer Kunststoff-, Papier- oder Holzfolie abgedeckt, wobei die Dekorfolie mit einem hitzehärtbaren Harz, insbesondere mit einem Melamin-Formaldehyd-Harz, imprägniert ist. Zweckmäßigerweise zeigt die Dekorfolie ein Flächengewicht von 80 bis 400, insbesondere 120 bis 300 g/m². Bei Verwendung von Melaminharzen in der Dekorschicht werden besonders gute Oberflächeneigenschaften des Formteils erzielt, insbesondere bezüglich seiner Kratzfestigkeit, Lichtechtheit und chemischen Resistenz. Die vorverdichtete Matte, gegebenenfalls mit dekorativen Deckschichten versehen, wird bei einer Temperatur von 120 bis 200 °C und einem Druck von 30 bis 100 bar in kontinuierlichen oder taktweise arbeitenden Preßvorrichtungen gepreßt und ausgehärtet. Während des Preßvorganges bildet sich durch Aushärten des Harzes das starre, vernetzte, homogene Plattenmaterial. Die Preßzeit ist abhängig von der Dicke der Platte. Die verwendete Preßvorrichtung zeigt eine flache oder strukturierte Preßfläche zur Herstellung von flachen Platten oder eine profilierte Preßfläche zur Herstellung von Platten mit profilartiger Form, z. B. in Form von Winkeln oder gewellten Platten.

Die dekorativen Platten zeigen ein Dichte von 1100 bis 1500 kg/m³ und eine Stärke von 0,5 bis 100, vorzugsweise 2 bis 40, insbesondere 2 bis 20 mm, in Abhängigkeit der Menge gestreuter Fasern pro Quadratmeter.

Die dekorativen Schichten können im Prinzip auch nach dem Preßvorgang durch Beschichtung mit Kunststoff- und Papierfolien, besonders vorteilhaft jedoch durch Lackierung mit organischen oder anorganischen Systemen, angebracht werden.

Als geeignetes organisches System für die bevorzugte Herstellung der dekorativen Schichten nach dem Preßvorgang wird beispielsweise ein vernetzbares Acrylharz, vernetzbares Polyurethanharz, vernetzbares Epoxidharz oder vernetzbares Melaminharz eingesetzt. Diese Harze werden auf die Platte nach dem Preßvorgang mittels Hitze und/oder Druck aufgebracht und enthalten vorteilhaft zur Erhöhung der dekorativen Wirkung ebenfalls Füllstoff und/oder Farbstoff, z. B. Farbstoffpigmente. Als geeignetes anorganisches System zur Herstellung der dekorativen Schichten dient eine Beschichtung mit Wasserglas zusammen mit Farben, wie Titandioxid, Zinksulfid oder Zinksulfat, und Füllstoffen, wie Quarzsand oder Glaskugeln.

Durch die ausgezeichneten physikalischen und dekorativen Eigenschaften, insbesondere durch die hohe Biegefestigkeit, die hohe Zugfestigkeit, die hohe Querzugfestigkeit und wegen der guten Maßbeständigkeit, der geringen Wasseraufnahme und der Isotropie in Längs- und Querrichtung ist die Bauplatte der Erfindung optimal geeignet zur Verwendung als selbsttragendes oder zur Verkleidung dienendes Formteil im Innen- und Außenausbau, z. B. in Form einer Naßzelle oder Fassadenverkleidung.

Die Erfindung wird anhand der folgenden Beispiele erläutert. Die Eigenschaften der dort beschriebenen Platten wurden nach einer Lagerzeit von 8 Tagen in Normalklima (23 °C, 50 % r. F.) bestimmt und sind in der Tabelle aufgeführt.

Beispiel 1

Entrindete Baumteile aus zerfaserbaren Kiefernholz werden von einer Hächselmühle in Holzschnitzel gemahlen. Anschließend werden diese Teilchen zum Erweichen in einem Wasserdampfkessel (Digestor) mit einem Dampfdruck von 6 bar einige Minuten gelagert. Die aufgeschlossenen Holzschnitzel werden in einer Mühle zerfasert.

Die erhaltenen losen Holzfasern werden nun mit einem Phenol-Formaldehyd-Harz imprägniert, indem man das Harz in wäßriger alkalischer Lösung in einem Luftstrom auf die Fasern aufbringt. Die Holzfasern, die etwa 270 g Trockenharz je 730 g Trockenholzfasern aufweisen, werden mit trockener Heißluft bis zu einer Restfeuchte von etwa 7,5 % getrocknet.

Die beharzten, getrockneten Holzfasern werden auf ein Transportband gestreut und unter Bildung einer bahnförmigen Matte geformt. Die Matte wird durch Vorpressen unter einem Druck von etwa 15 bar verdichtet und anschließend beidseitig mit jeweils einer Dekorfolie bedeckt, die aus einem Papier mit einem Flächengewicht von 120 g/m² besteht, welches mit 130 Gew.-% (bezogen auf das Papiergewicht) eines Vorkondensats von Melamin-Formaldehyd-Harz getränkt ist. Der Schichtstoff aus Matte und Dekorfolien wird einer Presse zugeführt, wobei man gegebenenfalls die gewünschten Plattenformate durch Schneiden der bahnförmigen Matte vor oder nach der Presse herstellt. Nach dem Pressen über eine Zeitdauer von etwa 16 Minuten bei 140 °C und unter einem Preßdruck von 80 bar erhält man Platten mit einer Dicke von 12 mm.

Beispiel 2

Es werden dekorative Platten hergestellt nach dem in Beispiel 1 beschriebenen Verfahren, indem man etwa 235 g Phenol-Formaldehyd-Harz (fest) auf 765 g Trockenholzfasern aufsprüht.

Die beharzten Fasern werden getrocknet bis zu einer Restfeuchte von etwa 8,0%.

Die Platten zeigen eine Dicke von 12 mm.

Beispiel 3

Man stellt dekorative Platten nach Beispiel 1 her, wobei anstelle von Holzfasern Cellulosefasern mit Phenol-Formaldehyd-Harz imprägniert werden. Bei der Beleimung wird 270g Harz je 730g Fasern aufgebracht. Die beleimten Fasern werden bis zu einer Restfeuchte von etwa 7,5 Gew.-% getrocknet. Nach Bildung und Vorverdichtung der Fasermatte wird diese mit der im Beispiel 1 beschriebenen Dekorfolie bedeckt und einer Presse zugeführt. Das Pressen erfolgt bei 140 °C und 80 bar während 16 Minuten. Die erhaltenen Platten zeigen eine Dicke von 12 mm.

## Beispiel 4

Man stellt eine dekorative Platte nach Beispiel 1 her. Anstelle von Holzfasern werden reine Cellulosefasern mit Phenol-Formaldehyd-Harz imprägniert. Nach dem Trocknen zeigen die Cellulosefasern 235 g Harz je 765 g Cellulosefasern und eine Restfeuchte von 8 %. Die Cellulosefasern werden unter Bildung einer Matte abgelegt. Es folgen die im Beispiel 1 beschriebenen Verfahrensschritte, wobei man die Matte nach dem Verdichten und Zuschneiden auf das spätere Plattenformat zusammen mit den beidseitig aufgebrachten Dekorfolien kontinuierlich einer Presse zuführt und etwa 16 Minuten bei 140 °C und unter einem Preßdruck von 90 bar verpreßt. Die erhaltenen Platten zeigen eine Dicke von 12 mm.

## Beispiel 5

Man stellt eine dekorative Platte nach Beispiel 1 her. Anstelle von Holzfasern verwendet man ein Gemisch aus reisen Cellulosefasern und erweichten Holzfasern im Gewichtsverhältnis von 8 : 1. Nach dem Imprägnieren mit Phenol-Formaldehyd-Harz und Trocknen zeigen die Fasern einen Harzgehalt von 205 g je 795 g Fasern. Die weiteren Verfahrensschritte entsprechen den im Beispiel 1 angegebenen. Die Platten zeigen eine Dicke von 12 mm.

## Beispiel 6

Nach dem im Beispiel 1 beschriebenen Verfahren werden Holzteilchen erweicht, zerfasert, mit Harz imprägniert und getrocknet. Die Holzfasern zeigen nach dem Trocknen einen Harzgehalt von 205 g auf 795 g Holzfasern.

Die beharzten Holzfasern werden kontinuierlich in Wirrlage auf ein horizontales Transportband gestreut und zu einer bahnförmigen Matte geformt. Die Matte wird durch Vorpressen unter einem Druck von 15 bar verdichten und nach dem Besäumen in plattenförmige Formate kontinuierlich einer Bandpresse zugeführt. Nach dem Pressen über eine Zeitdauer von 16 Minuten bei 140°C und unter einem Preßdruck von 80 bar werden die erhaltenen Platten in einer Lackstraße beidseitig mit vernetztem Acrylharz beschichtet und anschließend in einem Ofen bei 120 °C gelagert, wobei das Harz aushärtet. Die erhaltenen Platten zeigen eine Dicke von 12 mm.

## Beispiel 7

Nach dem im Beispiel 1 beschriebenen Verfahren werden Holzteilchen erweicht, zerfasert, mit Harz imprägniert und getrocknet. Die Holzfasern zeigen nach dem Trocknen einen Harzgehalt von 205 g auf 795 g Holzfasern.

Die beharzten Holzfasern werden kontinuierlich in Wirrlage auf ein horizontales Transportband abgelegt und zu einer bahnförmigen Matte geformt. Die Matte wird durch Vorpressen unter einem Druck von 25 bar verdichtet und anschließend beidseitig mit einer Dekorschicht bedeckt, die folgende Zusammensetzung aufweist (Angaben in Gew.-%): Melamin-Formaldehyd-Harz (60), gebleichte Cellulosefasern (31), Farbstoff (1), Titandioxid-Pigmente (8).

Der Schichtkörper aus Dekorschichten und verdichteter Matte wird in einer stationären Presse über eine Zeitdauer von 16 Minuten und bei einer Temperatur von 140 °C unter einem Druck von 80 bar gepreßt. Nach Ablauf der Preßzeit wird die Presse ohne Rückkühlung geöffnet.

## Beispeil 8

Lose getrocknete Holzfasern werden zunächst in einem Luftstrom mit einer Mischung aus Polyol und Diisocyanat beleimt. Die aufgebrachte Menge der Mischung beträgt 72 g je 714 g Holzfasern.

Anschließend wird hitzehärtbares Phenol-Formaldehyd-Harz in wäßriger alkalischer Lösung auf die Holzfasern aufgesprüht. Die aufgebrachte Menge an Phenol-Formaldehyd-Harz beträgt 214 g je 714 g Holzfasern. Die beleimten Holzfasern werden mit trockener Luft bis zu einer Restfeuchte von etwa 7,0 % getrocknet.

Die beharzten, getrockneten Holzfasern werden auf ein Transportband gestreut und unter Bildung einer bahnförmigen Matte geformt. Die Matte wird durch Vorpressen unter einem Druck von 25 bar kalt verdichtet und anschließend beidseitig mit der Dekorfolie des Beispiels 1 bedeckt.

Die vorgepreßte Matte wird zusammen mit den Dekorfolien in einer Presse über eine Zeitdauer von 16 Minuten und bei einer Temperatur von 150 °C unter einem Druck von 80 bar gepreßt. Man erhält eine 12 mm starke dekorative Platte.

In der Tabelle sind die Eigenschaften der in den Beispielen beschriebenen Platten aufgeführt. Die Prüfungen erfolgten nach Klimatisierung (8 Tage, Normalklima).

Zur Prüfung des Verhaltens der Platten bei Klimawechselbedingungen (Klimawechseltest) werden Platten einer Größe 20 x 20 cm zehn Zyklen von je 2 Tagen ausgesetzt; jeder Zyklus beinhaltet eine Lagerung bei 20 °C/65 % r. F./12 h., danach 80 °C/90 % r. F./12 h und anschließend -20 °C/12 h.

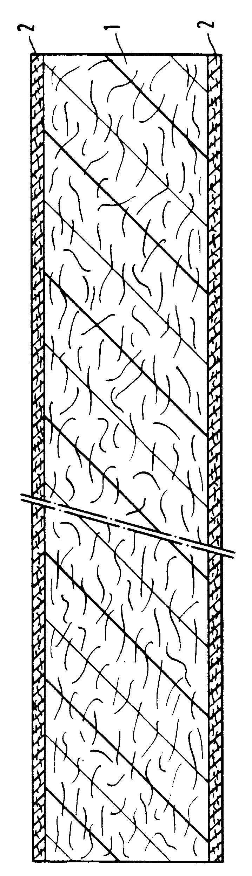

Die einzige Figur zeigt in Seitenansicht und im Schnitt eine bevorzugte Ausführungsform der Bauplatte, bestehend aus faserhaltigem, planem Kern 1 und zwei äußeren dekorativen Schichten 2.

(Siehe Tabelle Seite 8 f.)

## Tabelle

| Eigenschaften | | Prüf-methode | Dimen-sion | Beisp. 1 | Beisp. 2 | Beisp. 3 | Beisp. 4 | Beisp. 5 | Beisp. 6 | Beisp. 7 | Beisp. 8 |
|---|---|---|---|---|---|---|---|---|---|---|---|
| Dicke | | DIN 52350 | mm | 12 | 12 | 12 | 12 | 12 | 12 | 12 | 12 |
| Dichte | | DIN 53479 | kp/m$^3$ | 1390 | 1190 | 1400 | 1400 | 1390 | 1380 | 1325 | 1390 |
| Biegefestigkeit | längs | DIN 53452 | N/mm$^2$ | 100 | 90 | 45 | 45 | 55 | 85 | 85 | 95 |
| | quer | | | 100 | 90 | 45 | 45 | 55 | 85 | 85 | 95 |
| Zugfestigkeit | längs | DIN 53455 | N/mm$^2$ | 75 | 75 | 35 | 35 | 40 | 70 | 70 | 75 |
| | quer | | | 75 | 75 | 35 | 35 | 40 | 70 | 70 | 75 |
| Maßbeständigkeit (24 h.- 70 °C) | längs | DIN 53799 | % | 0,14 | 0,15 | 0,10 | 0,10 | 0,14 | 0,12 | 0,13 | 0,12 |
| | quer | | | 0,14 | 0,15 | 0,10 | 0,10 | 0,14 | 0,12 | 0,13 | 0,12 |
| Maßbeständigkeit | längs | ++ | % | 0,05 | 0,06 | 0,19 | 0,21 | 0,2 | 0,2 | 0,20 | 0,06 |
| | quer | | | 0,05 | 0,06 | 0,19 | 0,21 | 0,2 | 0,2 | 0,20 | 0,06 |
| Wasseraufnahme | | DIN 53799 | % | 0,4 | 0,5 | 0,3 | 0,4 | 0,6 | 0,6 | 0,5 | 0,5 |
| Quellung | | DIN 53799 | % | 1,7 | 1,7 | 1,0 | 1,1 | 1,5 | 1,5 | 1,4 | 1,4 |
| Klimawechseltest | | s. Be-schreibung | - | gut+ | gut | gut | gut | gut | gut | gut | gut |
| Xenontest | | DIN 54004 | Stufe | 8 | 8 | 8 | 8 | 8 | 8 | 8 | 8 |

gut+ = keine Blasen- und Rißbildung
++ = 20 °C, 7 Tage im Wasser, Probe 20 cm lang

**Patentansprüche**

1. Dekorative, insbesondere für Außenanwendungen geeignete bauplatte bestehend aus einem gepreßten Kern aus Holzteilchen, die von hitzegehärtetem Phenol-Formaldehyd-Harz umgeben sind, und dekorativer Schicht auf einer oder beiden Oberflächen des Kerns, dadurch gekennzeichnet, daß der Kern aus Holzfasern und/oder Cellulosefasern mir einer maximalen Länge von 20 mm besteht, diese Fasern mit den hitzehärtbarem Phenol-Formaldehyd-Harz in wäßriger Lösung beschichtet sind, der Harzanteil von mehr als 150 bis zu 900 g je 1000 g Trockenfasern (Wassergehalt 3 bis 10 Gew.-%) und die Dichte der bauplatte 1100 bis 1500 kg/m$^3$ beträgt.

2. Bauplatte nach Anspruch 1, dadurch gekennzeichnet, daß die dekorative Schicht aus einem Gewebe, Vliesstoff, einer Kunststoff-, Papier- oder Holzfolie und/oder aus einer Lackschicht besteht.

3. Bauplatte nach Anspruch 2, dadurch gekennzeichnet, daß die dekorative Schicht aus einer mit einem hitzehärtbaren Harz, insbesondere mit Melamin-Formaldehyd-Harz, getränkten Dekorfolie mit einem Flächengewicht von 80 bis 400 g/m$^2$, insbesondere 120 bis 300 g/m$^2$ besteht.

4. Bauplatte nach Anspruch 2, dadurch gekennzeichnet, daß die Dekorschicht aus einem vernetzten Acryl-, Urethan-, Epoxid- oder Melaminharz oder Wasserglas besteht und gegebenenfalls Füllstoff und/oder Farbstoff enthält.

5. Bauplatte nach einem der Ansprüche 1 bis 4, dadurch gekennzeichnet, daß sie eine Dicke von 2 bis 40, insbesondere 2 bis 20 mm hat.

6. Bauplatte nach einem der Ansprüche 1 bis 5, dadurch gekennzeichnet, daß sie ein phenol-. Formaldehyd-Harz mit flammwidrigem Additiv enthält.

7. Bauplatte nach einem der Ansprüche 1 bis 5, dadurch gekennzeichnet, daß sie ein Kunstharz enthält, das durch Modifizierung in der Molekülkette flammwidrige Eigenschaften zeigt.

8. Verfahren zur Herstellung der Bauplatte nach einem der Ansprüche 1 bis 7, bei dem man eine oder mehrere übereinander angeordnete, mechanisch vorverdichtete Schichten auf basis von Holzteilchen, welche mit einem hitzehärtbarem Phenol-Formaldehyd-Harz versehen wurden, unter Ausbildung des Kerns der Bauplatte in der Hitze verpreßt, wobei das Kunstharz gehärtet wird, und die Oberfläche(n) des Kerns mit dekorativer Schicht versieht, dadurch gekennzeichnet, daß man Holzfasern und/oder Cellülosefasern mit einer maximalen Länge von 20 mm mit mehr als 15 und bis zu 90 Gew.-% des hitzehärtbaren Phenol-Formaldehyd-Harzes (bezogen auf das Fasergewicht) in wäßriger Lösung beschichtet oder imprägniert, die mit der Harzlösung versehenen Fasern bis zu einer Restfeuchte von 2 bis 15 Gew.-% trocknet, wobei das Harz teilweise aushärtet, und die getrockneten Fasern in Wirrlage zu einer bahnförmigen Matte formt, die Matte mechanisch vorverdichtet und danach die Matte in einer oder mehreren übereinander angeordneten Schichten unter harzhärtenden bedingungen erhitzt und verpreßt, wobei man die dekorative Schicht auf die vorverdichtete Matte oder nach dem Verpressen auf die Kernschicht aufbringt.

9. Verfahren nach Anspruch 8, dadurch gekennzeichnet, daß man Holzschnitzel mit Wasserdampf unter einem Druck von 1 bis 10 bar erweicht, die Schnitzel zerfasert und gegebenenfalls trocknet und danach die erhaltenen Holzfasern mit einer maximalen Länge von 20 mm mit der wäßrigen Kunstharzlösung besprüht.

10. Verfahren nach Anspruch 8, dadurch gekennzeichnet, daß man Holzschnitzel während oder nach dem Zerfasern mit einer alkalischen Formaldehyd-Lösung behandelt, insbesondere unter einem Druck von 3 bis 10 bar und bei einer Temperatur von 80 bis 180 °C, unter chemischer Reaktion von Formaldehyd mit den Holzfasern.

11. Verfahren nach einem der Ansprüche 8 bis 10, dadurch gekennzeichnet, daß man die vorverdichtete bahnförmige Matte, gegebenenfalls zusammen mit auf die Matte aufgebrachter Dekorfolie(n), bei einer Temperatur im bereich von 120 bis 200°C, insbesondere 130 bis 180°C, und einem Druck im bereich von 30 bis 100 bar, insbesondere 50 bis 90 bar, verpreßt.

12. Verfahren nach einem der Ansprüche 8 bis 10, dadurch gekennzeichnet, daß man die dekorativen Schicht(en) auf die Oberfläche(n) der Kernschicht durch Lackierung der Oberfläche(n) oder beschichtung mit Kunststoff-, Holz- oder Papierfolien aufbringt.

13. Verfahren nach Anspruch 12, dadurch gekennzeichnet, daß die Lackierung der Oberfläche eines der in Anspruch 4 genannten Harze umfaßt und gegebenenfalls Füllstoff und/oder Farbstoff enthält.

14. Verwendung der Bauplatte nach einem der Ansprüche 1 bis zur Fassadenverkleidung.

## Claims

1. A decorative structural panel which is, in particular, suitable for exterior applications, comprising a compressed core of wood particles which are surrounded by a thermoset phenol-formaldehyde resin and a decorative layer on one or both surfaces of the core, wherein the core is formed of wood fibers and/or cellulose fibers having a length of not more than 20 mm, said fibers being coated with the thermosetting phenol-formaldehyde resin in an aqueous solution, the resin content being from more than 150 g up to 900 g per 1000 g of dry fibers (water content 3 to 10 percent by weight) and the density of the structural panel ranging from 1100 to 1500 kg/m$^3$.

2. A structural panel according to claim 1, wherein the decorative layer comprises a woven fabric, a non-woven, a plastic film, a paper overlay, a wood overlay and/or a varnish layer.

3. A structural panel according to claim 2, wherein the decorative layer comprises a decorative foil having a weight per unit area of from 80 to 400 g/m$^2$, particularly of from 120 to 300 g/m$^3$, which is impregnated with a thermosetting resin, in particular with a melamine-formaldehyde resin.

4. A structural panel according to claim 2, wherein the decorative layer comprises a cross-linked acrylic, urethane, epoxy or melamine resin or water glass and optionally contains a filler and/or a colorant.

5. A structural panel according to any of claims 1 to 4, which has a thickness of from 2 to 40 mm, in particular, from 2 to 20 mm.

6. A structural panel according to any of claims 1 to 5, which contains a phenol-formaldehyde resin with a flame-resistant additive.

7. A structural panel according to any of claims 1 to 5, which contains a synthetic resin which due to modifications in the molecular claim exhibits flame-resistant properties.

8. A process for producing the structural panel according to any of claims 1 to 7, comprising heating and compressing one or several superposed, mechanically predensified layers based on wood particles which have been provided with a thermosetting phenol-formaldehyde resin, thereby forming the core of the structural panel, the synthetic resin being hardened in the process, and providing the surface or surfaces of the core with a decorative layer, wherein wood fibers and/or cellulose fibers having a length of not more than 20 mm are coated or impregnated with more than 15 and up to 90 percent by weight of the thermosetting phenol-formaldehyde resin (based on the fiber weight) in an aqueous solution, the fibers provided with the resin solution are dried to a residual humidity of from 2 to 15 percent, the resin being partially hardened in the process, and the dried fibers which are in a tangled position are formed into a web-like mat, the mat is mechanically predensified and the predensified mat is then heated and compressed in one or several superposed layers under conditions sufficient to harden the resin, the decorative layer being applied to the predensified mat or, after compressing, to the core layer.

9. A process according to claim 8, wherein wood chips are softened with steam at a pressure of from about 1 to 10 bar, the chips are comminuted into fibers and optionally dried and the wood fibers obtained, which have a length of not more than 20 mm, are then sprayed with the aqueous synthetic resin solution.

10. A process according to claim 8, wherein wood chips, during or after comminution into fibers, are treated with an alkaline formaldehyde solution, particularly at a pressure of from about 3 to 10 bar and at a temperature of from about 80 to 180 °C, to produce a chemical reaction of the formaldehyde with the wood fibers.

11. A process according to any of claims 8 to 10, wherein the predensified web-like mat is compressed, optionally together with a decorative foil or foils applied to the mat, at a temperature in the range from 120 to 200 °C, particularly 130 to 180 °C and a pressure in the range from 30 to 100 bar, particularly 50 to 90 bar.

12. A process according to any of claims 8 to 10, wherein the decorative layer or layers are applied to the surface or surfaces of the core layer by varnishing the surface or surfaces or coating with plastic films or wood or paper overlays.

13. A process according to claim 12, wherein varnishing of the surface comprises coating with one of the resins mentioned in claim 4 which optionally contains a filler and/or a colorant.

14. Use of the structural panel according to any of claims 1 to 7 for exterior cladding.

## Revendications

1. Panneau de construction décoratif convenant en particulier pour des applications à l'extérieur, constitué d'une âme de particules de bois pressées, qui sont entourées d'une résine phénol-formaldéhyde thermodurcie et d'une couche décorative sur une des faces de l'âme ou sur les deux, caractérisé en ce que l'âme se compose de fibres de bois et/ou de fibres de cellulose d'une longueur maximale de 20 mm, en ce que ces fibres sont enduites de la résine phénolformaldéhyde thermodurcissable en solution aqueuse, en ce que la proportion de résine est de plus de 150 jusqu'à 900 g pour 1000 g de fibres sèches (teneur en eau 3 à 10 % en poids) et en ce que la densité du panneau de construction est de 1100 à 1500 kg/m$^3$.

2. Panneau de construction suivant la revendication 1, caractérisé en ce que la couche décorative se compose d'un tissu, d'un non-tissé, d'une feuille de matière plastique, de papier ou de bois et/ou d'une couche de laque.

3. Panneau de construction suivant la revendication 2, caractérisé en ce que la couche décorative se compose d'une feuille décorative d'un grammage de 80 à 400 g/m$^2$, en particulier de 120 à 300 g/m$^2$, imprégné d'une résine thermodurcissable, en particulier d'une résine mélamine-formaldéhyde.

4. Panneau de construction suivant la revendication 2, caractérisé en ce que la couche décorative se compose d'une résine acrylique uréthanne, époxy ou mélamine réticulée ou de silicate de sodium, et contient le cas échéant une charge et/ou un colorant.

5. Panneau de construction suivant l'une des revendications 1 à 4, caractérisé en ce qu'il a une épaisseur de 2 à 40, en particulier de 2 à 20 mm.

6. Panneau de construction suivant l'une des revendications 1 à 5, caractérisé en ce qu'il contient une résine phénol-formaldéhyde avec un additif ignifugeant.

7. Panneau de construction suivant l'une des revendications 1 à 5, caractérisé en ce qu'il contient une résine synthétique qui présente, par modification dans la chaîne de la molécule, des propriétés ignifuges.

8. Procédé de fabrication du panneau de construction suivant l'une des revendications 1 à 7, dans lequel on presse à chaud une ou plusieurs couches à base de particules de bois disposées les unes sur les autres, précompactées mécaniquement, qui ont été munies d'une résine phénol-formaldéhyde thermodurcissable, avec formation de l'âme du panneau de construction, la résine synthétique étant durcie, et en ce qu'on munit la ou les surfaces de l'âme d'une couche décorative, caractérisé en ce qu'on enduit ou imprègne des fibres de bois et/ou des fibres de cellulose ayant une longueur maximale de 20 mm avec plus de 15 et jusqu'à 90 % en poids de la résine phénol-formaldéhyde (par rapport au poids de fibre) en solution aqueuse, en ce qu'on sèche les fibres munies de la solution de résine jusqu'à une humidité résiduelle de 2 à 15 % en poids, la résine durcissant partiellement, et en ce qu'on façonne les fibres séchées, en position emmêlée, en un matelas en forme de feuille, en ce qu'on précompacte mécaniquement le matelas, puis en ce qu'on chauffe et presse le matelas en une ou plusieurs couches superposées, dans des conditions de durcissement de la résine, en appliquant la couche décorative sur le matelas précompacté ou après le pressage sur la couche d'âme.

9. Procédé suivant la revendication 8, caractérisé en ce qu'on ramollit des copeaux de bois avec de la vapeur d'eau sous une pression de 1 à 10 bars, en ce qu'on défibre les copeaux et en ce qu'on les sèche le cas échéant, puis en ce qu'on pulvérise sur les fibres de bois obtenues, d'une longueur maximale de 20 mm, la solution aqueuse de résine synthétique.

10. Procédé suivant la revendication 8, caractérisé en ce qu'on traite des copeaux avant ou après défibrage par une solution alcaline de formaldéhyde, en particulier sous une pression de 3 à 10 bars, et à une température de 80 à 180°C, avec réaction chimique du formaldéhyde avec les fibres de bois.

11. Procédé suivant l'une des revendications 8 à 10, caractérisé en ce qu'on presse le matelas en forme de feuille précompacté, le cas échéant en même temps qu'une ou plusieurs feuilles décoratives appliquées sur le matelas, à une température dans le domaine de 120 à 200°C, en particulier de 130 à 180° C, et sous une pression dans le domaine de 30 à 100 bars, en particulier de 50 à 90 bars.

12. Procédé suivant l'une des revendications 8 à 12, caractérisé en ce qu'on applique la ou les feuilles décoratives sur la ou les surfaces de la couche d'âme par laquage de la ou des surfaces, ou revêtement avec des feuilles de matières plastiques, de bois ou de papier.

13. Procédé suivant la revendication 12, caractérisé en ce que le laquage de la surface contient une des résines indiquées dans la revendication 4, et le cas échéant une charge et/ou un colorant.

14. Utilisation du panneau de construction, selon l'une des revendications 1 à 7, pour le revêtement des façades.